**Europäisches Patentamt**

**European Patent Office**

**Office européen des brevets**

(19)

(11) Veröffentlichungsnummer: **0 124 648**
**B1**

(12) # EUROPÄISCHE PATENTSCHRIFT

(45) Veröffentlichungstag der Patentschrift:
**17.02.88**

(21) Anmeldenummer: **83112388.0**

(22) Anmeldetag: **09.12.83**

(51) Int. Cl.⁴: **F 16 C 29/06**

(54) **Linearlageranordnung zur geradlinigen Führung eines Schlittens längs einer Führungsschiene.**

(30) Priorität: **12.04.83 DE 3313129**

(43) Veröffentlichungstag der Anmeldung:
**14.11.84 Patentblatt 84/46**

(45) Bekanntmachung des Hinweises auf die Patenterteilung:
**17.02.88 Patentblatt 88/7**

(84) Benannte Vertragsstaaten:
**AT BE CH FR GB IT LI LU NL SE**

(56) Entgegenhaltungen:
**EP - A - 0 118 691**
**DE - A - 3 138 970**
**DE - B - 1 256 489**
**DE - B - 2 346 343**
**US - A - 3 353 875**

(73) Patentinhaber: **IPIRANGA SA, Carretera gral. Madrid-Irun KM 456, E-Lasarte/Guipuzcoa (ES)**

(72) Erfinder: **Lehmann, Wolfgang, Ing.grad., Nagoldstrasse 97, D-7000 Stuttgart 50 (DE)**
Erfinder: **Aab, Hans-Walter, Fronackerstrasse 10/1, D-7050 Waiblingen (DE)**

(74) Vertreter: **Rüger, Rudolf, Dr.-Ing. et al, Webergasse 3 Postfach 348, D-7300 Esslingen/Neckar (DE)**

### Beschreibung

Die Erfindung betrifft eine Linearlageranordnung zur geradlinigen Führung eines Schlittens längs einer Führungsschiene, mit wenigstens zwei zwischen dem Schlitten und der Führungsschiene angeordneten endlosen Reihen von Kugeln, bei der die Führungsschiene den tragenden Kugeln jeder Kugelreihe zugeordnete, in Schienenlängsrichtung sich erstreckende Kugellaufbahnen aufweist und bei der im Inneren des Schlittens zumindest ein längliches, zwei Kugellaufbahnen aufweisendes Laufbahnelement sowie Umlenk- und Rückführbahnen für die entlasteten Kugeln angeordnet sind, wobei das Laufbahnelement mit die beiden Umlenk- und die beiden Rückführbahnen enthaltenden Umlenk- und Rückführelementen zu einer Baueinheit vereinigt ist, in der die Kugeln unverlierbar gehaltert sind und die in den Schlitten eingefügt ist.

Bei bekannten Linearlageranordnungen (DE-A-2 136 024, DE-A-2 945 594) sind unmittelbar in dem aus Stahl ein- oder mehrteilig hergestellten, die Führungsschiene allseitig oder C-förmig umfassenden Schlitten vier parallele Kugellaufbahnen eingearbeitet. Da die in ihrem Profil dem Umriss der Kugeln angepassten Kugellaufbahnen verhältnismässig engtoleriert geschliffen werden müssen, ist die genaue Herstellung eines einteiligen, solche Kugellaufbahnen tragenden Schlittens insbesondere bei kleinen Abmessungen nicht einfach. Mehrteilige Schlitten bedingen aber einen erhöhten Herstellungsaufwand und erfordern zusätzliche Massnahmen, um die die Kugellaufbahnen tragenden Teile genau lagerichtig zueinander und zu der Führungsschiene zu fixieren. Da die Oberfläche der Kugellaufbahnen gehärtet sein muss, müssen in diesen Fällen auch der Schlitten oder seine Teile gehärtet werden, womit die kundenseitige nachträgliche Anordnung von Befestigungsbohrungen oder dergl. für mit dem Schlitten zu verbindende Maschinenelemente erschwert oder unmöglich gemacht wird. Auch unterliegen die Kugellaufbahnen einem gewissen Verschleiss; wenn dieser das zulässige Mass überschreitet, muss der ganze Schlitten ausgetauscht werden.

Es ist auch schon bekannt (DE-C-2 346 343), im Inneren des Schlittens zu beiden Seiten der Längsmittelebene der Führungsschiene je ein in Gestalt einer streifenförmigen Schale ausgebildetes Laufbahnelement anzuordnen, das mindestens zwei Laufbahnen für die Kugeln trägt. Dies hat den Vorteil, dass jedes Laufbahnelement getrennt von dem Schlitten hergestellt und bearbeitet sowie bei Verschleiss ausgetauscht werden kann. Zu diesem Zwecke muss aber der Schlitten durch Abnahme von die Umlenkbahnen enthaltenden Deckeln demontiert werden, wobei, ebenso wie bei der Abnahme des Schlittens von der Führungsschiene, die Kugeln der Kugelreihen als lose Teile anfallen.

Bei einer anderen zum Stand der Technik gehörenden gattungsgemässen Linearlageranordnung (EP-A-0 118 691) ist die Anordnung derart getroffen, dass jeweils ein zwei Kugellaufbahnen aufweisendes Laufbahnelement mit die beiden Umlenk- und die beiden Rückführbahnen enthaltenden Umlenk- und Rückführelementen zu einer Baueinheit vereinigt ist, in der die Kugeln unverlierbar gehaltert sind. Zwei solcher Baueinheiten sind in dem die Führungsschiene nach Art eines Gehäuses allseitig umgebenden Schlittens angeordnet. Da bei jeder dieser Baueinheiten die beiden Rückführbahnen auf der den Kugellaufbahnen zugewandten Seite des Laufbahnelementes angeordnet sind, kann zum einen die Baueinheit eine bestimmte, durch die vier nebeneinanderliegenden Kugelbahnen vorgegebene Mindestbreite nicht unterschreiten, während zum anderen eine Führungsschiene Verwendung finden muss, die eine die beiden Kugellaufbahnen enthaltende wannenartige Vertiefung aufweist. Die in diese wannenartigen Vertiefungen ragenden beiden Baueinheiten sind in dem den Schlitten bildenden Gehäuse jeweils nur über eine Kugel und eine Druckschraube an einer einzigen Verbindungsstelle allseitig beweglich abgestützt. Jede Baueinheit kann sich damit zwar auf die Führungsschiene selbsttätig einstellen, doch ergibt sich damit insgesamt ein recht aufwendiger Aufbau der Linearlageranordnung, bei der es nicht ohne weiteres möglich wäre, die Baueinheiten in dem Schlitten exakt masshaltig genau zu fixieren, so dass auch seitlich an dem Schlitten angreifende Kräfte oder Drehmomente ohne weiteres aufgenommen werden können. Entsprechendes gilt auch für eine aus der US-A-3 353 875 bekannten Linearlageranordnung grundsätzlich ähnlichen Aufbaus.

Schliesslich ist noch ein Wälzlager für Längsführungen bekannt geworden (DE-B-1 256 489), bei dem jeder Rücklaufkanal aus einem Abschnitt eines rinnenförmigen Strangprofiles besteht, dessen Bodensteg die Kugellaufbahn und die Kugelrückführbahn aufweist. Ein solches rinnenförmiges Strangprofil aus hochwertigem Stahl – wie er mit Rücksicht auf die Qualität der Kugellaufbahn erforderlich ist – zu pressen, ist teuer und aufwendig. Die Kugelumlenkmittel sind scheibenförmige Abschnitte eines V- oder L-förmigen Strangprofils, dessen einer Schenkel der Befestigung am Bodensteg dient, während der andere Schenkel als Umlenkschale ausgebildet ist. Kugelumlenkelemente in Gestalt solcher Abschnitte eines Strangprofiles gestatten aber nur eine annähernde Anpassung an die Kugelform.

Aufgabe der Erfindung ist es, eine Linearlageranordnung zu schaffen, die bei universeller Einsatzmöglichkeit sich durch grosse Genauigkeit der Führung des Schlittens auf der Führungsschiene auszeichnet, einen einfachen Aufbau aufweist und eine einfache Montage sowie eine bequeme Austauschmöglichkeit von Verschleissteilen gewährleistet.

Zur Lösung dieser Aufgabe ist die eingangs genannte Linearlageranordnung erfindungsgemäss dadurch gekennzeichnet, dass die beiden Rückführbahnen auf der den Kugellaufbahnen abgewandten Rückseite des Laufbahnelementes angeordnet und durch wenigstens ein lediglich die Rückführbahnen enthaltendes, rohr- oder rinnenförmiges Rückführelement gebildet oder begrenzt sind, dass das Rückführelement und die stirnseitig an das Laufbahnelement anschliessenden Umlenkelemente mit dem Laufbahnelement durch wenigstens ein Halterungselement lösbar verbunden sind und dass das Laufbahnelement mit entsprechenden Flächen im Inneren des Schlittens zusammenwirkende Führungsflächen trägt.

Diese Ausbildung der Linearlageranordnung gewährleistet zum einen einen sehr einfachen, herstellungsgünstigen Aufbau der Baueinheit, weil das Laufbahnelement ein leicht und exakt zu bearbeitendes leistenförmiges Teil ist und die Umlenk- und Rückführelemente ohne weiteres aus Kunststoff hergestellt werden können, wobei das Ganze durch das Halterungselement bequem montierbar ist. Da das Laufbahnelement breitseitig freiliegt und mit Führungsflächen versehen ist, ist eine exakt masshaltige Fixierung der ganzen Baueinheit im Inneren des Schlittens gewährleistet. Die ein einheitliches Ganzes ohne lose Teile bildende Baueinheit wird nach Art eines Wälzlagereinsatzes einfach in eine entsprechende Ausnehmung in dem Schlitten eingefügt. Dieser enthält deshalb keine gehärteten Kugellaufbahnen oder dergl.; er kann ganz mit Rücksicht auf die Anforderungen des jeweiligen Einsatzzweckes gestaltet und bspw. als abgelängtes Teil eines Strangpressprofiles ausgebildet sein, das auch aus Leichtmetall bestehen kann. Die Lagereinsätze können auf Vorrat gehalten und von dem Benutzer selbst bedarfsgemäss eingesetzt oder ausgetauscht werden, ohne dass dazu eine besondere Geschicklichkeit oder ein grösserer Montageaufwand erforderlich wären. Da die Rückführbahnen auf der Rückseite des Laufbahnelementes angeordnet sind, ergibt sich eine sehr kompakte Bauweise der Baueinheit. Durch entsprechende Wahl der Länge des Laufbahnelementes, das bspw. von einem entsprechend langen Profilteil abgeschnitten wird und auf das endseitig einfach die Umlenkelemente aufgesetzt sind, kann somit die Baueinheit den verschiedenartigen Belastungsverhältnissen angepasst werden, ohne dass es notwendig wäre, hierzu eine Vielfalt unterschiedlicher Einzelteile auf Vorrat zu halten.

In einer bevorzugten Ausführungsform enthält die Baueinheit ein auf das Laufbahnelement aufgesetztes Halteblech, das wenigstens einen die auf der Kugellaufbahn des Laufbahnelementes befindlichen Kugeln mit seinen Berandungsteilen haltenden Längsschlitz aufweist. Dabei kann zwischen das Halteblech und das Laufbahnelement eine die Kugelführungsbahn des Laufbahnelementes seitlich nach aussen hin abdichtende Dichtung eingefügt sein, um damit bei Öl- oder Fettschmierung der Kugellaufbahn und der Kugeln einen Schmiermittelaustritt zu verhindern. Gleichzeitig wird auf diese Weise eine Verschmutzung der Kugellaufbahn der Baueinheit verhütet, während andererseits erforderlichenfalls auch eine Lebensdauerschmierung vorgesehen werden kann.

Die Umlenkelemente enthalten zweckmässigerweise die Umlenkbahn bildende Profilnuten, die auf der offenen Seite bis auf eine Kugeleinlauf- und Auslauföffnung durch ein ein- oder angesetztes, entsprechend der Umlenkbahn profiliertes Umlenkteil verschlossen sind. Dabei kann die Anordnung derart getroffen sein, dass die beiden Umlenkteile einer Baueinheit durch einen angeformten Steg miteinander verbunden sind und das Ganze auf das Laufbahnelement seitlich aufsetzbar ausgebildet ist. Die Umlenkteile können dann gleich mit das Laufbahnelement umgreifenden Halterungsteilen verbunden sein, wobei sich besonders einfache konstruktive Verhältnisse ergeben, wenn die beiden Umlenkelemente und das Rückführelement einstückig miteinander verbunden sind. Durch den Steg und das rinnenförmig gestaltete Rückführelement kann die Rückführbahn begrenzt sein; auch können die beiden Umlenkelemente und/oder die Umlenkteile und das Rückführelement formschlüssig miteinander verbunden sein.

In einer zweckmässigen Ausführungsform ist das Halterungselement ein die Umlenkelemente umgreifender, im wesentlichen U-förmiger federnder Haltebügel. Ausserdem können die beiden Umlenkelemente und das Halteblech Verriegelungselemente aufweisen, wobei die Umlenkelemente und das Laufbahnelement durch das Halteblech formschlüssig axial zusammengehalten sind. Die Umlenkelemente können auf der Rückseite schliesslich jeweils eine den Haltebügel aufnehmende Aufnahmenut aufweisen, so dass der Haltebügel selbst in der Baueinheit versenkt angeordnet ist.

Da die Umlenkbahnen und die Rückführbahnen für die Kugeln in eigenen Elementen der den Wälzlagereinsatz bildenden Baueinheit, und nicht in Teilen des Schlittens ausgebildet sind, können die Umlenkelemente und/oder -teile, wie auch das Rückführelement, aus Kunststoffmaterial bestehen. Dadurch wird nicht nur die Herstellung erleichtert und verbilligt, sondern auf diese Weise lässt sich vor allem eine geräuschlose Funktion der Linearlageranordnung gewährleisten.

Die Führungsflächen des aus Stahl bestehenden Laufbahnelementes können auf wenigstens einer auf der den Kugellaufbahnen abgewandten Seite des Laufbahnelementes angeordneten Leisten liegen. Entsprechende Führungsflächen können zusätzlich auch seitlich an dem Laufbahnelement vorgesehen sein. Durch die erwähnte Leiste kann gleichzeitig das auf der gleichen Seite des Laufbahnelementes liegende Rückführelement seitlich abgestützt sein.

Zur Erzielung eines spielfreien Laufes des Schlittens auf der Führungsschiene sind die belasteten Kugeln in der Regel zwischen den paarweise einander zugeordneten Kugellaufbahnen der Führungsschiene und des jeweiligen Laufbahnelementes mit Vorspannung eingefügt. Um einen kontinuierlichen Aufbau bzw. Abbau dieser Kugelvorspannung beim Eintritt bzw. beim Austritt aus den Kugellaufbahnen zu gewährleisten, kann das Laufbahnelement stirnseitig im Bereich des Kugelein- und/oder -austritts in bzw. aus der Kugellaufbahn mit einem federnden Bereich ausgebildet sein. In einer bevorzugten Ausführungsform ist dieser federnde Bereich jeweils durch eine mit dem Laufbahnelement verbundene elastisch nachgiebige Lippe gebildet, die gegebenenfalls durch eine stirnseitig angeordnete Nut des Laufbahnelementes begrenzt ist.

Die einen Wälzlagereinsatz bildende Baueinheit ist mit Vorteil in eine entsprechende Ausnehmung des Schlittens eingesetzt und in dieser axial durch wenigstens einen auf den Schlitten seitlich aufgesetzten Deckel gehalten, wobei zwischen den Deckel und den Schlitten eine Dichtung eingefügt sein kann. Der Schlitten selbst kann, wie bereits früher erwähnt, ungehärtet und mit winkeligen Anschlussflächen ausgebildet sein, wie dies den Anforderungen des jeweiligen Einsatzfalles entspricht.

Wenn die Linearlageranordnung zur geführten, verdrehgesicherten Linearbewegung eines für grosse Lastaufnahme geeigneten Schlittens eingerichtet ist, ist es vorteilhaft, wenn zwei an dem an der im Querschnitt T- oder doppel-T-förmigen Führungsschiene die dem Laufbahnelement zugeordneten parallelen Kugellaufbahnen jeweils in dem Übergangsbereich zwischen zwei einander benachbarten, senkrecht aufeinanderstehenden Schenkeln der Führungsschiene angeordnet sind. Um eine in allen Richtungen im wesentlichen gleichmässige Lastaufnahmefähigkeit zu erzielen, ist es zweckmässig, dass bei beiden Kugellaufbahnen des jeweiligen Laufbahnelementes und der Führungsschienen die Berührungslinie von Kugellaufbahn und tragenden Kugeln unter einem Winkel von 45° zur Längsmittelebene des Laufbahnelementes verläuft. Ausserdem kann der die Führungsschiene zumindest C-förmig umgreifende Schlitten zwei auf gegenüberliegenden Seiten der mit entsprechenden Kugellaufbahnen ausgebildeten Führungsschiene liegende Baueinheiten enthalten. In der Zeichnung sind Ausführungsbeispiele des Gegenstandes der Erfindung dargestellt. Es zeigen:

Fig. 1 eine Linearlageranordnung gemäss der Erfindung, in perspektivischer auseinandergenommener Darstellung, unter Veranschaulichung des längs der Linie III–III der Fig. 2 geschnittenen Schlittens,

Fig. 2 die Linearlageranordnung nach Fig. 1 in zusammengebautem Zustand, teilweise geschnitten längs der Linie II–II der Fig. 1, in einer stirnseitigen Ansicht, in einem anderen Massstab,

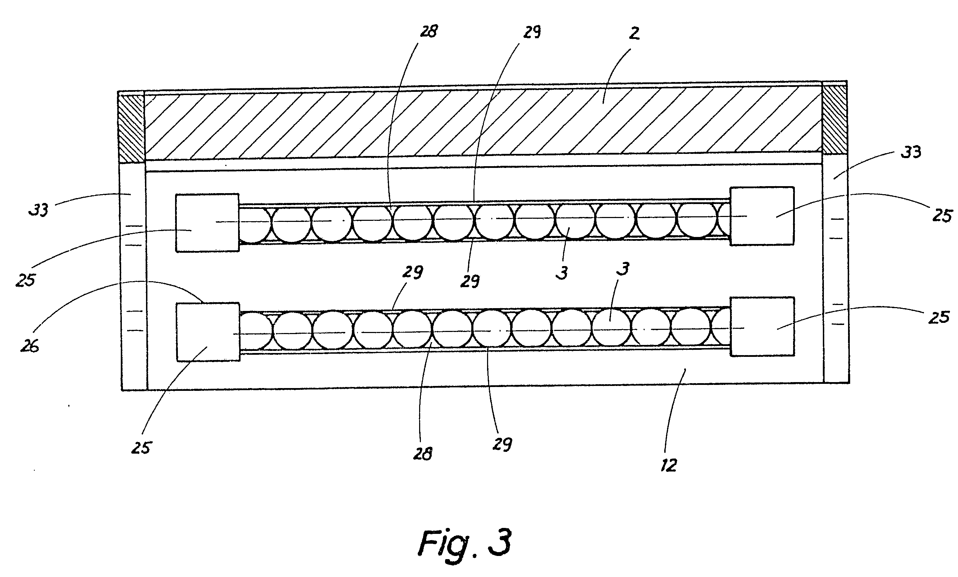

Fig. 3 die Linearlagereinheit nach Fig. 2, geschnitten längs der Linie III–III der Fig. 2, in einer Seitenansicht, bei weggelassener Führungsschiene, unter Veranschaulichung einer einen Wälzlagereinsatz bildenden Baueinheit,

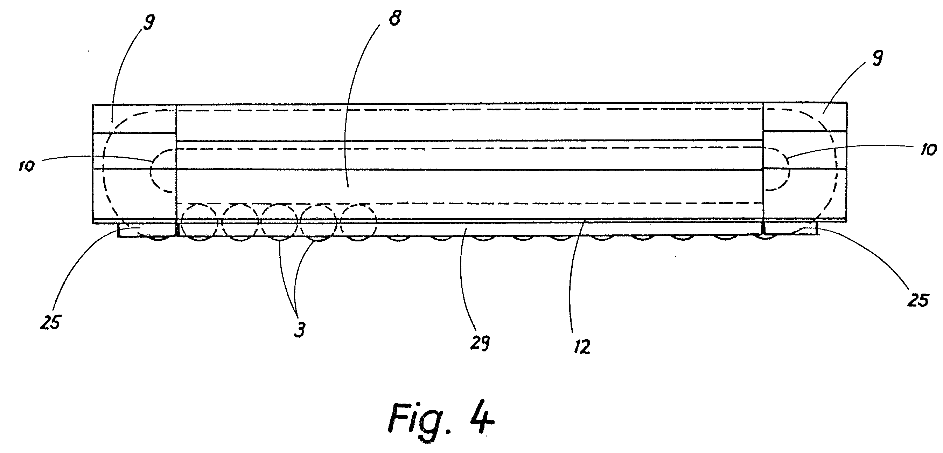

Fig. 4 die Baueinheit nach Fig. 3, in einer Seitenansicht,

Fig. 5 ein Umlenkelement der Baueinheit nach Fig. 4, geschnitten längs der Linie IV–IV der Fig. 1, in einer Seitenansicht,

Fig. 6 ein Laufbahnelement der Linearlageranordnung nach Fig. 1, in perspektivischer Teildarstellung,

Fig. 7 das Halteblech einer einen Wälzlagereinsatz bildenden Baueinheit der Linearlageranordnung nach Fig. 1, in einer anderen Ausführungsform, in perspektivischer Teildarstellung und in einem anderen Massstab,

Fig. 8 die Umlenkteile für das Halteblech nach Fig. 7, in perspektivischer Darstellung,

Fig. 9 ein kombiniertes Umlenk- und Rückführelement für das Halteblech nach Fig. 7, in perspektivischer Teildarstellung, und

Fig. 10 die die Teile nach den Fig. 7 bis 9 enthaltende Linearlagereinheit, im Querschnitt und in einer Draufsicht.

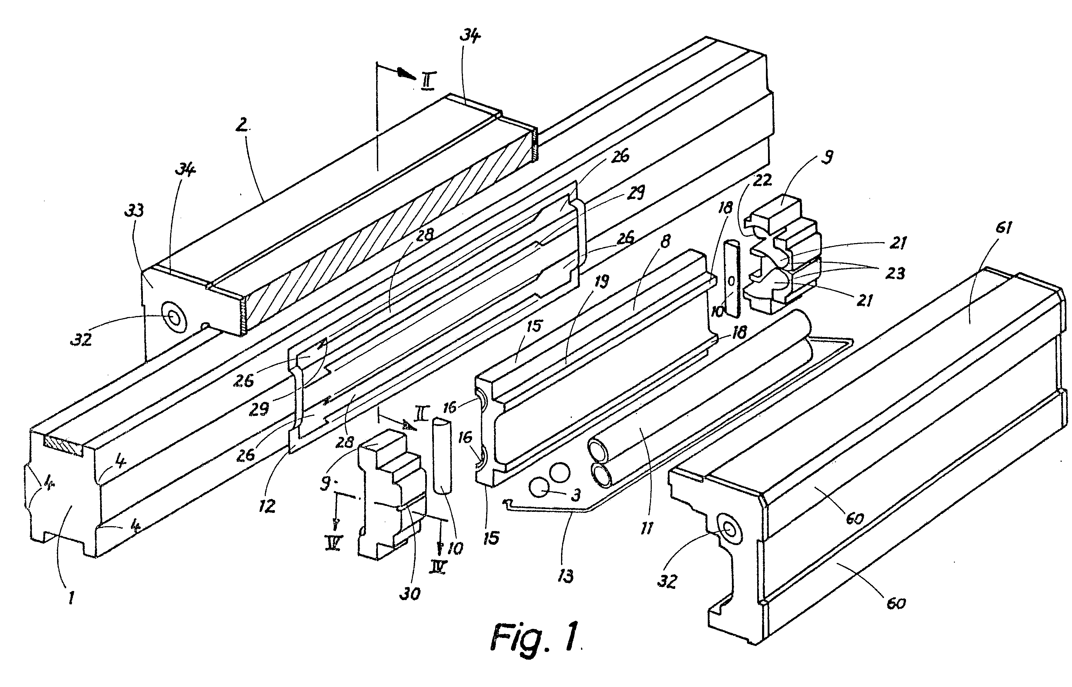

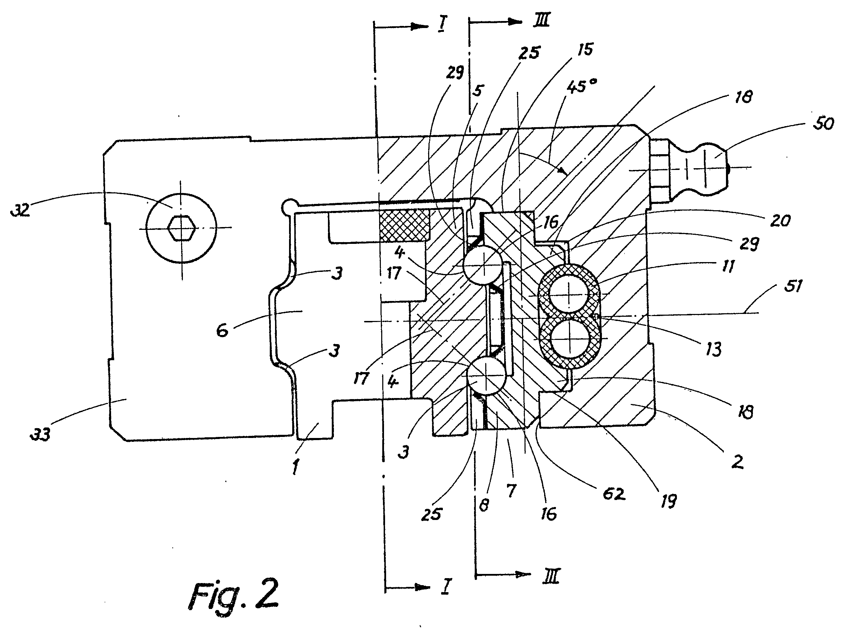

Die in den Fig. 1, 2 dargestellte Linearlagereinheit weist eine massive Doppel-T-förmige Führungsschiene 1 auf, auf der ein die Führungsschiene 1 umgreifender, im Querschnitt C-förmiger Schlitten 2 geradlinig längsgeführt ist. Zwischen dem Schlitten 2 und der Führungsschiene 1 sind vier endlose Reihen von Kugeln angeordnet, durch die der Schlitten 2 auf der Führungsschiene 1 gelagert ist. Die Führungsschiene 1 trägt vier parallele, in ihrem Profil jeweils der Umrissgestalt der Kugeln 3 angepasste Kugellaufbahnen 4, die in der aus Fig. 2 ersichtlichen Weise jeweils in dem Bereich des Überganges zwischen zwei benachbarten, aufeinander senkrecht stehenden Schenkeln 5, 6 der Führungsschiene 1 angeordnet sind. Die Kugellaufbahnen 4 sind gehärtet; die Führungsschiene 1 besteht aus Stahl.

Im Inneren des Schlittens 2 sind zu beiden Seiten der Führungsschiene 1 zwei als Wälzlagereinsätze dienende Baueinheiten 7 angeordnet, von denen jede ein längliches leistenartiges Laufbahnelement 8, zwei Umlenkelemente 9 mit zwei Umlenkteilen 10, ein Rückführelement 11 und ein Halteblech 12, sowie einen als Drahtbügel ausgebildeten Haltebügel 13 aufweist, der die erwähnten Teile der Baueinheit unverlierbar zusammenhält.

Das aus Stahl bestehende Laufbahnelement 8 ist in Gestalt einer flachen, seitlich durch parallele Führungsflächen 15 begrenzten Leiste ausgebildet, auf deren Vorderseite zwei gehärtete geschliffene Kugellaufbahnen 16 vorgesehen sind, deren Profil der Umrissgestalt der Kugeln 3 angepasst ist. Die Kugellaufbahnen 16 sind, ebenso wie die Kugellaufbahnen 4 der Führungsschiene 1, derart angeordnet, dass die bei 17 in Fig. 2 angedeuteten Berührungslinien von Kugellaufbahn und tragenden Kugeln 3 unter einem Winkel von 45° zur Längsmittelebene des Laufbahnelementes 8 verlaufen, so dass sich unabhängig von der Lastangriffsrichtung an dem Schlitten 2 immer eine etwa gleichmässige Lastaufnahme ergibt. Auf der den Kugellaufbahnen 16 gegenüberliegenden Seite ist das Laufbahnelement 8 mit zwei parallelen Leisten 18 versehen, an denen ebenfalls Führungsflächen 19 ausgebildet sind. Die Führungsflächen 19 und die Führungsflächen 15 des Laufbahnelementes 8 wirken mit entsprechenden Führungsflächen in die Baueinheit 7

aufnehmenden Ausnehmungen 20 des Schlittens 2 zusammen, derart, dass das Laufbahnelement 8 und damit die Baueinheit 7 in dem Schlitten 2 jeweils exakt lagerichtig fixiert ist.

Das Laufbahnelement 8 kann von einer längeren Profilschiene entsprechend der jeweils erforderlichen Länge der Baueinheit 7 abgelängt werden. Seine Kugellaufbahnen 16 sind für die Bearbeitung frei zugängig, was in gleichem Masse auch für die Führungsflächen 15, 19 gilt, so dass diese Teile mit hoher Präzision gefertigt werden können.

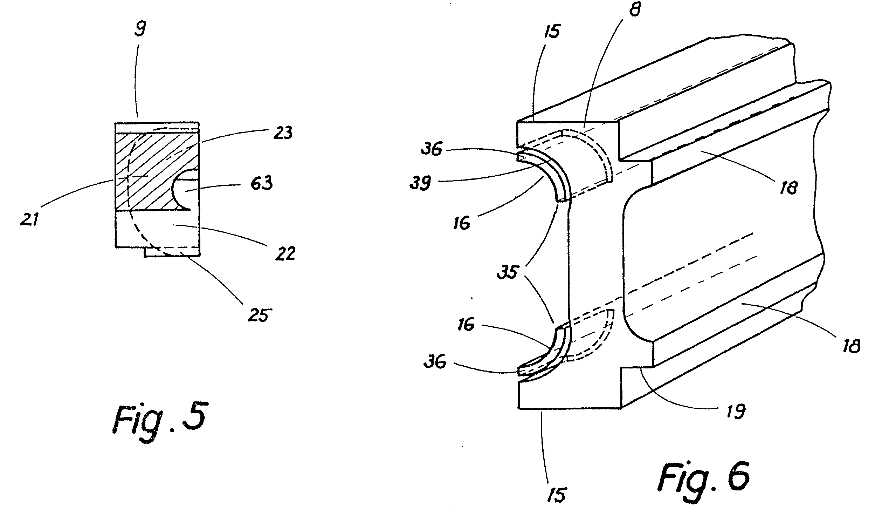

An das Laufbahnelement 8 sind stirnseitig die beiden aus Kunststoffmaterial bestehenden Umlenkelemente 9 angesetzt, von denen jedes zwei jeweils eine im wesentlichen U-förmige Kugelumlaufbahn bildende Nuten 21 enthält. Die nebeneinander liegenden Nuten 21 sind bis auf eine auf der Höhe der jeweils zugeordneten Kugellaufbahn 16 des Laufbahnelementes 8 liegende Kugeleinlauföffnung 22 und eine auf der Rückseite des Laufbahnelementes 8 mündende Kugelauslauföffnung 23 durch ein im wesentlichen halbzylindrisches Umlenkteil 10 verschlossen, das in eine entsprechende Ausnehmung 63 (Fig. 5) des Umlenkelementes 9 eingelegt ist und mit seiner Planfläche an der benachbarten Stirnfläche des Laufbahnelementes 8 anschliesst.

Auf der den Kugellaufbahnen 16 abgewandten Rückseite des Laufbahnelementes 8 ist das in Gestalt eines Doppelrohres ausgebildete, ebenfalls aus Kunststoffmaterial bestehende und zwei Kugelrückführbahnen enthaltende Rückführelement 11 angeordnet, dessen Rückführbahnen an die Kugelaustrittsöffnungen 23 der Umlenkelemente 9 anschliessen. Das Rückführelement 11 ist seitlich zwischen den beiden Leisten 18 gehalten.

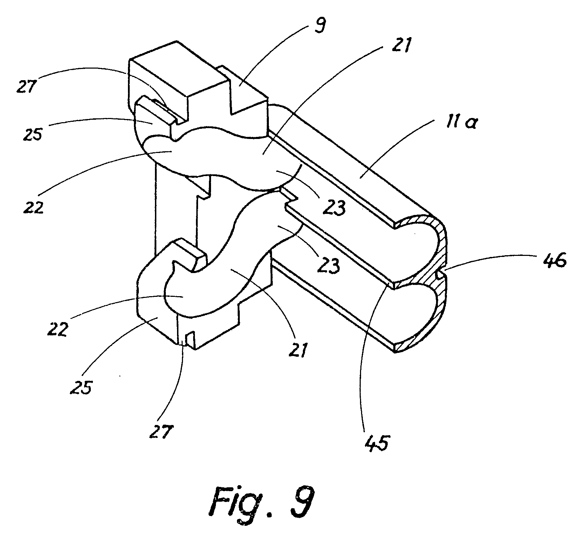

Jedes der im Querschnitt etwa entsprechend der Profilgestalt des Laufbahnelementes 8 gestalteten Umlenkelementes 9 trägt auf seiner Vorderseite zwei Fortsätze 25, die bei zusammengesetzter Baueinheit 7 in entsprechend gestaltete rechteckige Öffnungen 26 des auf das Laufbahnelement 8 vorne aufgesetzten Haltebleches 12 eingreift. Die Fortsätze 25 sind mit Rastleisten 27 (Fig. 9) versehen, die die Berandung der Ausnehmungen 26 hintergreifen und damit das Halteblech 12 unverlierbar haltern.

Das Halteblech 12 ist mit zwei parallelen, jeweils in zwei Ausnehmungen 26 endenden Längsschlitzen 28 ausgebildet, die den beiden Kugellaufbahnen 16 des Laufbahnelementes 8 zugeordnet sind und durch deren entsprechend der Kugelkrümmung abgebogene Berandungsteile 29 die auf der zugeordneten Kugellaufbahn 16 des Laufbahnelementes 8 befindlichen tragenden Kugeln 3 beweglich aber unverlierbar gehaltert sind.

An den beiden Umlenkelementen 9 ist schliesslich auf der Rückseite noch eine Aufnahmenut 30 für den Drahtbügel 13 vorgesehen, der die beiden durch das mit den Fortsätzen 25 zusammenwirkende Halteblech axial mit dem Laufbahnelement 8 fixierten Umlenkelemente 9 und das Rückführelement 11 zusammenhält.

Damit sind alle beschriebenen Teile zu der Baueinheit 7 verbunden, in der die Kugeln 3 unverlierbar gehalten sind.

Die beiden Baueinheiten 7 werden bei der Montage von der Seite her in die Ausnehmungen 20 des Schlittens 2 eingeschoben und durch zwei stirnseitig auf den Schlitten 2 aufgesetzte und mittels Senkschrauben 32 befestigten Deckel 33 axial fixiert. Zwischen jedem Deckel 33 und dem Schlitten 2 kann eine bei 34 in Fig. 1 angedeutete Dichtung vorgesehen sein.

Die zwischen den jeweils paarweise einander zugeordneten Kugellaufbahnen 4, 16 befindlichen tragenden Kugeln 3 jeder endlosen Kugelreihe stehen unter Vorspannung, so dass eine spielfreie Führung des Schlittens 2 auf der Führungsschiene 1 gewährleistet ist. Um beim Eintritt in bzw. beim Austritt aus dem Lastbereich einen kontinuierlichen Auf- bzw. Abbau der Kugelvorspannung zu gewährleisten, ist das Laufbahnelement 8 im Bereiche seiner beiden Stirnseiten jeweils mit einem federnden Bereich bei 35 ausgebildet. Zu diesem Zwecke ist in dem federnden Bereich 35 jeweils eine Lippe 36 vorgesehen, die dadurch gebildet ist, dass stirnseitig in das Laufbahnelement 8 eine im wesentlichen teilkreisförmige Nut 39 eingestochen ist, deren Tiefe so bemessen ist, dass sich die erforderliche Länge des elastischen Bereiches 35 ergibt. Nach dem Austritt aus dem elastischen Bereich 35 werden die Kugeln 3 in dem zugeordneten Umlenkelement 9 durch die Nut 21 auf die Rückseite des Laufbahnelementes 8 und in das Rückführelement 11 geleitet, durch das sie entspannt zu der die Umlenkbahn bildenden Nut 21 des anderen Umlenkelementes wandern, durch die sie in den elastischen Bereich 35 am Eingang des Laufbahnelementes 8 geleitet werden.

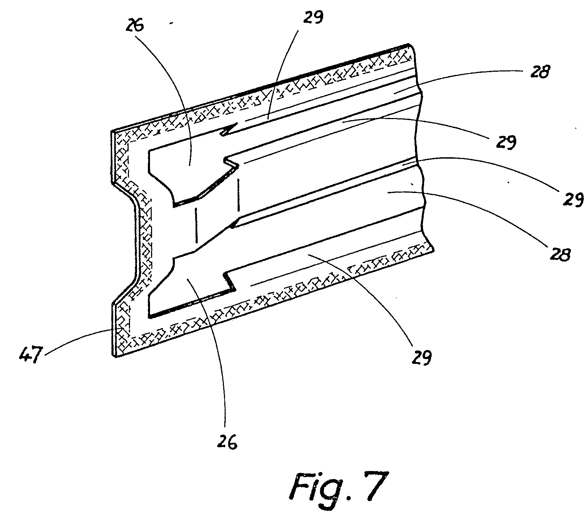

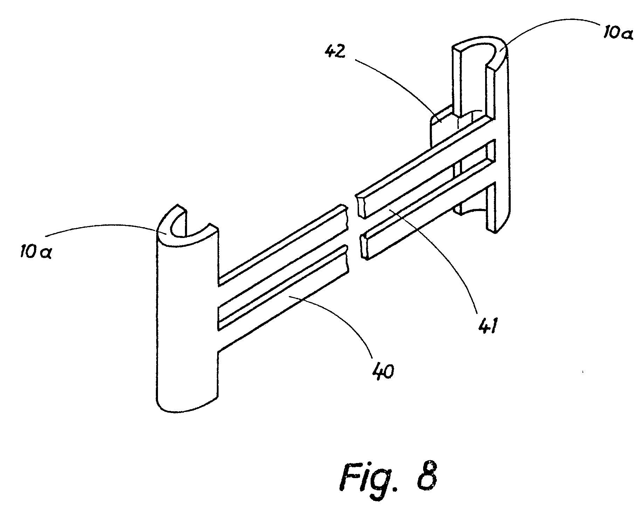

Während bei der in den Fig. 1, 2 dargestellten Ausführungsform die Umlenkelemente 9, die Umlenkteile 10 und das Rückführelement 11 als getrennte Kunststoffteile ausgebildet sind, sind bei der Ausführungsform nach den Fig. 7 bis 10 die beiden im Querschnitt etwa hufeisenförmigen Umlenkteile 10a durch einen Steg 40 miteinander verbunden, der einen Längsschlitz 41 enthält.

Auf der dem Steg 40 gegenüberliegenden Seite sind an den Umlenkteilen 10a zwei Haltenasen 42 angeformt.

Die durch den Steg 40 miteinander verbundenen Umlenkelemente 10a werden bügelartig seitlich auf das Laufbahnelement 8 aufgeschoben, wobei die Haltenasen 42 das Laufbahnelement 8 umklammern. Das ganze Gebilde besteht aus Kunststoffmaterial.

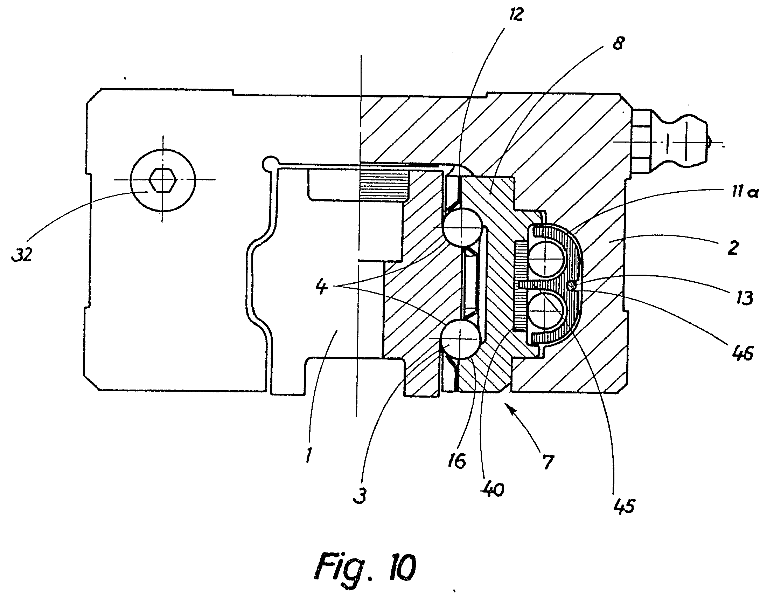

Ausserdem sind die beiden Umlenkelemente 9 mit dem nach Art einer Doppelrinne ausgebildeten Rückführelement 11a einstückig verbunden, wobei das Ganze wiederum aus Kunststoffmaterial besteht. Das Rückführelement 11a weist einen mittigen, zwischen den beiden Rückführbahnen liegenden Längssteg 45 auf, der in montiertem Zustand in den Längsschlitz 41 eingefügt ist. Wie aus Fig. 10 zu ersehen, sind dann die Kugelrückführbahnen auf der einen Seite durch den Steg 40 und auf der anderen Seite durch das rinnenartige Rückführelement 11a begrenzt.

Das Ganze wird wieder durch den Drahtbügel 13 zusammengehalten, der in einer Aufnahmenut 46 auf der Rückseite des Rückführelementes 11a vertieft untergebracht ist.

Der Vorteil dieser Ausführungsform liegt zum einen darin, dass sie weniger getrennte Einzelteile für die Kugelumlenkung und Rückführung aufweist, und dass die Kugelumlenk- und Rückführbahnen ohne Stossstellen ineinander übergehen.

Das Halteblech 12 kann schliesslich in der aus Fig. 7 ersichtlichen Weise randseitig eine bspw. aufgespritzte Weichdichtung 47 tragen, die bei auf das Laufbahnelement 8 aufgesetztem Halteblech 12 die Kugellaufbahnen 16 schmiermitteldicht nach aussen abdichtet. Zur Schmierung kann der Schlitten 2 mit den Baueinheiten 7 zugeordneten, in die Ausnehmung 20 führenden Schmiernippeln 50 ausgerüstet sein. Wegen der Dichtung 47 kann aber auch jede Baueinheit 7 sogar mit einer Lebensdauerdichtung versehen werden.

Bei den beschriebenen Ausführungsbeispielen enthält jede Baueinheit 7 zwei endlose Kugelreihen, denen zwei parallele Kugellaufbahnen 16 des Laufbahnelementes 8 zugeordnet sind. Grundsätzlich sind aber auch Ausführungsformen denkbar, bei denen jede Baueinheit 7 lediglich eine Kugelreihe und eine zugeordnete Kugellaufbahn 16 aufweist. Eine solche (halbe) Baueinheit 7 ergibt sich in einfacher Weise dadurch, dass die Baueinheit 7, bezogen auf Fig. 2, längs der dort angedeuteten Linie 51, zweigeteilt ist. Die Baueinheiten 7 können sowohl in ein- als auch in zweireihiger Ausführung als Wälzlagereinsätze für die verschiedensten Arten von Schlitten und Führungsschienen Verwendung finden, wobei anstelle der Führungsschiene auch ein Maschinenelement treten kann, an dem eine entsprechende Kugellaufbahn angeordnet ist.

Die Einführöffnung 62 (Fig. 2) des C-förmigen Schlittens 2 ist so weit, dass bei herausgenommenen Baueinheiten 7 der Schlitten 2 über die Führungsschiene 1 gehoben werden kann. Anschliessend werden die geradflankig begrenzten Baueinheiten 7 seitlich in die Ausnehmungen 20 des Schlittens 2 eingeschoben, worauf die Deckel 33 aufgeschraubt werden.

**Patentansprüche**

1. Linearlageranordnung zur geradlinigen Führung eines Schlittens (2) längs einer Führungsschiene (1), mit wenigstens zwei zwischen dem Schlitten und der Führungsschiene angeordneten endlosen Reihen von Kugeln (3), bei der die Führungsschiene den tragenden Kugeln jeder Kugelreihe zugeordnete, in Schienenlängsrichtung sich erstreckende Kugellaufbahnen (14) aufweist und bei der im Inneren des Schlittens zumindest ein längliches, zwei Kugellaufbahnen aufweisendes Laufbahnelement (8) sowie Umlenk- und Rückführbahnen für die entlasteten Kugeln angeordnet sind, wobei das Laufbahnelement (8) mit die beiden Umlenk- und die beiden Rückführbahnen enthaltenden Umlenk- und Rückführelementen (9, 10, 11) zu einer Baueinheit (7) vereinigt ist, in der die Kugeln (3) unverlierbar gehaltert sind und die in den Schlitten (2) eingefügt ist, dadurch gekennzeichnet, dass die beiden Rückführbahnen auf der den Kugellaufbahnen (16) abgewandten Rückseite des Laufbahnelementes (8) angeordnet und durch wenigstens ein lediglich die Rückführbahnen enthaltendes, rohr- oder rinnenförmiges Rückführelement (11) gebildet oder begrenzt sind, dass das Rückführelement und die stirnseitig an das Laufbahnelement anschliessenden Umlenkelemente (9) mit dem Laufbahnelement (8) durch wenigstens ein Halterungselement (25; 13) lösbar verbunden sind und dass das Laufbahnelement mit entsprechenden Flächen (62) im Inneren des Schlittens (2) zusammenwirkende Führungsflächen (19, 15) trägt.

2. Linearlageranordnung nach Anspruch 1, dadurch gekennzeichnet, dass die Baueinheit (7) ein auf das Laufbahnelement (8) aufgesetztes Halteblech (12) enthält, das wenigstens einen die auf der Kugellaufbahn (16) des Laufbahnelementes (8) befindlichen Kugeln (3) mit seinen Berandungsteilen (29) halternden Längsschlitz (28) aufweist.

3. Linearlageranordnung nach Anspruch 2, dadurch gekennzeichnet, dass zwischen das Halteblech (12) und das Laufbahnelement (8) eine die Kugelführungsbahn (16) des Laufbahnelementes (8) seitlich nach aussen hin abdichtende Dichtung (47) eingefügt ist.

4. Linearlageranordnung nach Anspruch 1, dadurch gekennzeichnet, dass die Umlenkelemente (9) die Umlenkbahn bildende Profilnuten (21) enthalten, die auf der offenen Seite bis auf eine Kugeleinlauf- und -auslauföffnung (22, 23) durch ein ein- oder angesetztes, entsprechend der Umlenkbahn profiliertes Umlenkteil (10, 10a) verschlossen sind.

5. Linearlageranordnung nach Anspruch 4, dadurch gekennzeichnet, dass die beiden Umlenkteile (10a) durch einen angeformten Steg (40) miteinander verbunden sind und das Ganze auf das Laufbahnelement (8) seitlich bügelartig aufsetzbar ausgebildet ist.

6. Linearlageranordnung nach Anspruch 5, dadurch gekennzeichnet, dass die Umlenkteile (10a) mit das Laufbahnelement (8) umgreifenden Halterungsteilen (42) verbunden sind.

7. Linearlageranordnung nach Anspruch 1, dadurch gekennzeichnet, dass die beiden Umlenkelemente (9) und das Rückführelement (10a) einstückig miteinander verbunden sind.

8. Linearlageranordnung nach den Ansprüchen 5 und 7, dadurch gekennzeichnet, dass durch den Steg (40) und das rinnenförmig gestaltete Rückführelement (10a) die Rückführbahn begrenzt ist.

9. Linearlageranordnung nach Anspruch 7, dadurch gekennzeichnet, dass die beiden Umlenkelemente (9) und/oder die Umlenkteile (10a) und das Rückführelement (11a) formschlüssig miteinander verbunden sind.

10. Linearlageranordnung nach Anspruch 1, dadurch gekennzeichnet, dass das Halterungselement ein die Umlenkelemente (9) umgreifender, im wesentlichen U-förmiger federnder Haltebügel (13) ist.

11. Linearlageranordnung nach den Ansprüchen 2 und 10, dadurch gekennzeichnet, dass die beiden Umlenkelemente (9) und das Halteblech (12) Verriegelungselemente (25) aufweisen und die Umlenkelemente (9) und das Laufbahnelement (8) durch das Halteblech (12) formschlüssig axial zusammengehalten sind.

12. Linearlageranordnung nach einem der vorhergehenden Ansprüche, dadurch gekennzeichnet, dass die Umlenkelemente (9) und/oder -teile (10, 10a) und/oder das Rückführelement (11, 11a) aus Kunststoffmaterial bestehen.

13. Linearlageranordnung nach Anspruch 1, dadurch gekennzeichnet, dass Führungsflächen (19) auf wenigstens einer auf der der Kugellaufbahn (16) abgewandten Seite des Laufbahnelementes (8) angeordneten Leiste (18) liegen.

14. Linearlageranordnung nach Anspruch 13, dadurch gekennzeichnet, dass das Rückführelement (11) durch die Leiste (18) seitlich abgestützt ist.

15. Linearlageranordnung nach einem der vorhergehenden Ansprüche, dadurch gekennzeichnet, dass das Laufbahnelement (8) stirnseitig im Bereiche des Kugelein- und/oder -austritts in bzw. aus der Kugellaufbahn (16) mit einem federnden Bereich (35) ausgebildet ist.

16. Linearlageranordnung nach Anspruch 15, dadurch gekennzeichnet, dass der federnde Bereich (35) jeweils durch eine mit dem Laufbahnelement (8) verbundene, elastisch nachgiebige Lippe (36) gebildet ist, die gegebenenfalls durch eine stirnseitig angeordnete Nut (39) des Laufbahnelementes (8) begrenzt ist.

17. Linearlageranordnung nach einem der vorhergehenden Ansprüche, dadurch gekennzeichnet, dass die Baueinheit (7) in eine entsprechende Ausnehmung (20) des Schlittens (2) eingesetzt und in dieser axial durch wenigstens einen auf den Schlitten (2) seitlich aufgesetzten Deckel (33) gehalten ist.

18. Linearlageranordnung nach Anspruch 17, dadurch gekennzeichnet, dass zwischen den Deckel (33) und den Schlitten (2) eine Dichtung (34) eingefügt ist.

19. Linearlageranordnung nach einem der vorhergehenden Ansprüche, dadurch gekennzeichnet, dass der Schlitten (2) ungehärtet und mit winkligen Anschlussflächen (60, 61) ausgebildet ist.

20. Linearlageranordnung nach einem der vorhergehenden Ansprüche, dadurch gekennzeichnet, dass an der im Querschnitt T- oder Doppel-T-förmigen Führungsschiene (1) die dem Laufbahnelement (8) zugeordneten parallelen Kugellaufbahnen (4) jeweils in dem Übergangsbereich zwischen zwei einander benachbarten, aufeinander senkrecht stehenden Schenkeln (5, 6) der Führungsschiene (1) angeordnet sind.

21. Linearlageranordnung nach Anspruch 20, dadurch gekennzeichnet, dass bei beiden Kugellaufbahnen (16, 4) des Laufbahnelementes (8) und der Führungsschiene (1) die Berührungslinie (17) von Kugellaufbahn und tragenden Kugeln unter einem Winkel von 45° zur Längsmittelebene des Laufbahnelementes (8) verläuft.

22. Linearlageranordnung nach Anspruch 21, dadurch gekennzeichnet, dass der die Führungsschiene (1) zumindest C-förmig umgreifende Schlitten (2) zwei auf gegenüberliegenden Seiten der mit entsprechenden Kugellaufbahnen (4) ausgebildeten Führungsschiene (1) liegende Baueinheiten (7) enthält.

## Claims

1. A linear bearing arrangement for the rectilinear guidance of a carriage (2) along a guide rail (1), having at least two endless rows of balls (3) disposed between the carriage and the guide rail, wherein the guide rail has ball races (4) extending in the longitudinal direction of the rail and associated with the supporting balls of each row of balls, and wherein at least one elongate race element (8) having two ball races and also deflecting and return tracks for the unloaded balls is disposed inside the carriage, the race element (8), being combined with deflecting and return elements (9, 10, 11) containing the two deflecting tracks and the two return tracks into a structural unit (7) in which the balls (3) are retained captive and which is inserted in the carriage (2), characterized in that the two return tracks are disposed on the rear side of the race element remote from the ball races (16) and are formed or bounded by at least one tubular or channel-shaped return element (11) containing only the return tracks, the return element and the deflecting elements (9) adjoining the race element (8) at the end face are releasably connected thereto via at least one retaining element (25; 13), and the race element bears guide surfaces (19, 15) cooperating with matching surfaces (62) inside the carriage (2).

2. A linear bearing arrangement according to Claim 1, characterized in that the structural unit (7) contains a retaining plate (12) which is placed over the race element (8) and is formed with at least one longitudinal slot (28) retaining by its marginal portions (29) the balls (3) situated on the ball race (16) of the race element (8).

3. A linear bearing arrangement according to Claim 2, characterized in that a seal (47) which seals the ball race (16) of the race element (8) laterally in the inward direction is inserted between the retaining plate (12) and the race element (8).

4. A linear bearing arrangement according to Claim 1, characterized in that the deflecting elements (9) contain profile grooves (21) which form the deflecting track and which are closed on the open side, except for a ball inlet and outlet aperture (22, 23), by a sectional deflecting portion (10, 10a) which is inserted or added to match the deflecting track.

5. A linear bearing arrangement according to Claim 4, characterized in that the two deflecting portions (10a) are interconnected via a moulded-on web (40) and the whole is constructed to be fitted laterally after the fashion of a bowed member on the race element.

6. A linear bearing arrangement according to Claim 5, characterized in that the deflecting portions (10a) are connected to retaining portions (42) engaging around the race element (8).

7. A linear bearing arrangement according to Claim 1, characterized in that the two deflecting elements (9) and the return element (10a) are interconnected in one piece.

8. A linear bearing arrangement according to Claims 5 and 7, characterized in that the return track is bounded by the web (40) and the channel-shaped return element (10a).

9. A linear bearing arrangement according to Claim 7, characterized in that the two deflecting elements (9) and/or the deflecting portions (10a) and the return element (11a) are positively interconnected.

10. A linear bearing arrangement according to Claim 1, characterized in that the retaining element is a substantially U-shaped resilient bowed returning member (13) which engages around the deflecting elements (9).

11. A linear bearing arrangement according to Claims 2 and 10, characterized in that the two deflecting elements (9) and the retaining plate (12) have locking elements (25) and the deflecting elements (9) and the race element (8) are axially held together positively by the retaining plate (12).

12. A linear bearing arrangement according to one of the preceding Claims, characterized in that the deflecting elements (9) and/or deflecting portions (10, 10a) and/or the return element (11, 11a) are made of plastics.

13. A linear bearing arrangement according to Claim 1, characterized in that the guide surfaces (19) lie on at least one strip disposed on the side of the race element (18) remote from the ball race (16).

14. A linear bearing arrangement according to Claim 13, characterized in that the return element (11) is borne laterally by the strip (18).

15. A linear bearing arrangement according to one of the preceding Claims, characterized in that the race element (8) is formed at the end face with a resilient zone (35) in the zone where the balls enter and/or leave the ball race (16).

16. A linear bearing arrangement according to Claim 15, characterized in that the resilient zone (35) is formed by a resilient lip (36) which is connected to the race element (8) and which if necessary is bounded by a groove (39) in the end face of the race element (8).

17. A linear bearing arrangement according to one of the preceding Claims, characterized in that the structural unit (7) is inserted in a matching recess (20) in the carriage (2) and retained axially therein by at least one cover (33) placed laterally on the carriage (2).

18. A linear bearing arrangement according to Claim 17, characterized in that a seal (34) is inserted between the cover (33) and the carriage (2).

19. A linear bearing arrangement according to one of the preceding Claims, characterized in that the carriage (2) is constructed unhardened and with angular connecting surfaces (60, 61).

20. A linear bearing arrangement according to one of the preceding Claims, characterized in taht each of the parallel ball races (4) associated with the race element (8) is disposed on the guide rail (1) of T- or double-T cross-sectional shape in the transition zone between two adjoining arms (5, 6) of the guide rail (1) which are perpendicular to one another.

21. A linear bearing arrangement according to Claim 20, characterized in that in both ball races (16, 4) of the race element (8) and the guide rail (1) the line of contact (17) of the ball race and the supporting balls extends at an angle of 45° to the longitudinal central plane of the race element (8).

22. A linear bearing arrangement according to Claim 21, characterized in that the carriage (2), which engages around the guide rail (1) at least in C-shape, comprises two structural units (7) disposed on opposite sides of the guide rail (1) constructed with corresponding ball races (4).

**Revendications**

1. Agencement de palier linéaire pour le guidage rectiligne d'un chariot (2) le long d'un rail de guidage (1), comportant au moins deux rangées sans fin de billes (3) agencées entre le chariot et le rail de guidage, le rail de guidage présentant des pistes (4) de roulement de billes qui s'étendent dans la direction longitudinale du rail et sont associées aux billes porteuses de chaque rangée de billes, au moins un élément allongé (8) à pistes de roulement, présentant deux pistes de roulement de billes, étant agencé à l'intérieur du chariot ainsi que des pistes de renvoi et de retour pour les billes non chargées, l'élément (8) à pistes de roulement étant réuni à des éléments de renvoi et de retour (9, 10, 11) contenant les deux pistes de renvoi et les deux pistes de retour, de manière à constituer une unité (7) dans laquelle les billes (3) sont maintenues de manière imperdable et qui est insérée dans le chariot (2), caractérisé par le fait que les deux pistes de retour sont agencées sur le côté arrière de l'élément (8) à pistes de roulement, de côté étant celui non en regard des pistes de roulement (16) des billes, et sont formées ou délimitées par au moins un élément (11) de retour en forme de tube ou de rigole, ne contenant que les pistes de retour, par le fait que l'élément de retour et les éléments de renvoi (9) se raccordant aux extrémités de l'élément à pistes de roulement sont assemblés amoviblement à l'élément (8) à pistes de roulement par au moins un élément de fixation (25; 13), et par le fait que l'élément à pistes de roulement porte des surfaces de guidage (19, 15) coopérant avec des surfaces correspondantes (62) à l'intérieur du chariot (2).

2. Agencement de palier linéaire selon revendication 1, caractérisé par le fait que l'unité (7) contient une tôle de maintien (12) qui est appliquée sur l'élément (8) à pistes de roulement et qui présente au moins une fente longitudinale (28) dont les parties marginales (29) maintiennent les billes (3) se trouvant sur la piste de roulement (16) de l'élément (8) à pistes de roulement.

3. Agencement de palier linéaire selon revendication 2, caractérisé par le fait qu'entre la tôle de maintien (12) et l'élément (8) à pistes de roulement est inséré un organe d'étanchéité (47) qui obture de manière étanche, latéralement vers l'extérieur, la piste (16) de guidage de billes de l'élément (8) à pistes de roulement.

4. Agencement de palier linéaire selon revendication 1, caractérisé par le fait que les éléments de renvoi (9) contiennent des rainures profilées (21) qui forment la piste de renvoi et qui, du côté ouvert, à l'exception d'une ouverture d'entrée et d'une ouverture de sortie des billes (22, 23), sont fermées par une partie déflectrice (10, 10a), insérée ou rapportée, profilée en correspondance avec la piste de renvoi.

5. Agencement de palier linéaire selon revendication 4, caractérisé par le fait que les deux parties déflectrices (10a) sont mutuellement reliées par une âme (40) formée entre elles, et par le fait que l'ensemble est aménagé de manière à pouvoir être rapporté latéralement, à la façon d'un étrier, sur l'élément (8) à pistes de roulement.

6. Agencement de palier linéaire selon revendication 5, caractérisé par le fait que les parties déflectrices (10a) sont reliées à des parties de fixation (42) qui chevauchent l'élément (8) à pistes de roulement.

7. Agencement de palier linéaire selon revendication 1, caractérisé par le fait que les deux éléments de renvoi (9) et l'élément de retour (10a) sont reliés en ne formant qu'une seule pièce.

8. Agencement de palier linéaire selon les revendications 5 et 7, caractérisé par le fait que la piste de retour est bordée par l'âme (40) et par l'élément de retour (10a) aménagé en forme de rigole.

9. Agencement de palier linéaire selon revendication 7, caractérisé par le fait que les deux éléments de renvoi (9) et/ou les parties déflectrices (10a) et l'élément de retour (11a) sont assemblés par conjugaison de formes.

10. Agencement de palier linéaire selon revendication 1, caractérisé par le fait que l'élément de fixation est un étrier de fixation élastique (13), sensiblement en forme de U, chevauchant les éléments de renvoi (9).

11. Agencement de palier linéaire selon les revendications 2 et 10, caractérisé par le fait que les deux éléments de renvoi (9) et la tôle de maintien (12) présentent des éléments de verrouillage (25), et par le fait que les éléments de renvoi (9) et l'élément (8) à pistes de roulement sont maintenus assemblés axialement par conjugaison de formes au moyen de la tôle de maintien (12).

12. Agencement de palier linéaire selon l'une des revendications précédentes, caractérisé par le fait que les éléments de renvoi (9) et/ou les parties déflectrices (10, 10a) et/ou l'élément de retour (11, 11a) sont en matière plastique.

13. Agencement de palier linéaire selon revendication 1, caractérisé par le fait que les surfaces de guidage (19) se trouvent sur au moins une nervure (18) agencée sur celui des côtés de l'élément (8) à pistes de roulement qui n'est pas en regard de la piste (16) de roulement des billes.

14. Agencement de palier linéaire selon revendication 13, caractérisé par le fait que l'élément de retour (11) est soutenu latéralement par la nervure (18).

15. Agencement de palier linéaire selon l'une des revendications précédentes, caractérisé par le fait que, frontalement, dans la région de l'entrée et/ou de la sortie des billes, dans ou hors de la piste de roulement (16), l'élément (8) à pistes de roulement est réalisé avec une zone élastique (35).

16. Agencement de palier linéaire selon revendication 15, caractérisé par le fait que chaque zone élastique (35) est formée par une lèvre déformable élastiquement (36), reliée à l'élément (8) à pistes de roulement et éventuellement bordée par une rainure (39), agencée frontalement, de l'élément (8) à pistes de roulement.

17. Agencement de palier linéaire selon l'une des revendications précédentes, caractérisé par le fait que l'unité (7) est insérée dans un évidement correspondant (20) du chariot (2) et y est maintenue axialement par au moins un couvercle (33) rapporté latéralement sur le chariot (2).

18. Agencement de palier linéaire selon revendication 17, caractérisé par le fait qu'un organe d'étanchéité (34) est inséré entre le couvercle (33) et le chariot (2).

19. Agencement de palier linéaire selon l'une des revendications précédentes, caractérisé par le fait que le chariot (2) n'est pas durci et comporte des surfaces de raccordement (60, 61) ayant une disposition en cornière.

20. Agencement de palier linéaire selon l'une des revendications précédentes, caractérisé par le fait que, sur le rail de guidage (1) ayant une section en T ou en double T, les pistes parallèles de roulement (4) des billes associées à l'élément (8) à pistes de roulement sont agencées à chaque fois dans la zone de transition entre deux ailes (5, 6) mutuellement perpendiculaires et voisines que comporte le rail de guidage (1).

21. Agencement de palier linéaire selon revendication 10, caractérisé par le fait que, sur les deux pistes de roulement de billes (16, 4) de l'élément (8) à pistes de roulement et du rail de guidage (1), la ligne de contact (17) entre piste de roulement et billes chargées fait un angle de 45° par rapport au plan médian longitudinal de l'élément (8) à pistes de roulement.

22. Agencement de palier linéaire selon revendication 21, caractérisé par le fait que le chariot (2), entourant le rail de guidage (1) au moins en C, comporte deux unités (7) situées sur des côtés opposés du rail de guidage (1) doté de pistes de roulement de billes (4) correspondantes.

Fig. 1.

0 124 648

Fig. 2

Fig. 3

0 124 648

0 124 648

9    8                9

10                              10

25        3      29    12        25

Fig. 4

Fig. 5

Fig. 6

0 124 648

0 124 648

26

29

28

29

29

28

47

29

26

*Fig. 7*

*Fig. 8*

0 124 648

0 124 648

Fig. 9

Fig. 10